# EUROPÄISCHE PATENTANMELDUNG

(11) **EP 1 314 532 A1**
(43) Veröffentlichungstag der Anmeldung: **28.05.2003**
(21) Anmeldenummer: 01127901.5
(22) Anmeldetag: 23.11.2001
(51) Int. Cl.: B29C 45/34

(54) **Formwerkzeug**

(71) Anmelder: An der Heiden, Dominik, 46485 Wesel (DE)
(72) Erfinder: An der Heiden, Dominik, 46485 Wesel (DE)
(74) Vertreter: Stenger, Watzke & Ring Patentanwälte

(57) **Zusammenfassung**

Die Erfindung betrifft ein Formwerkzeug zur Anwendung in Spritzguß- und/oder Spritzpreßverfahren, welches wenigstens ein Werkzeugunterteil und ein Werkzeugoberteil aufweist. Bei den im Stand der Technik bekannten Formwerkzeugen ergeben sich Probleme bei der Entlüftung der Form. Die vorliegende Erfindung überkommt diese Probleme dadurch, daß zumindest das Werkzeugunterteil des Formwerkzeug einen formgebenden Bereich aufweist, der aus luftdurchlässigem Material gebildet ist. Dadurch kann die Luft in vorteilhafter Weise einfach während des Spritzguß- oder Spritzpressverfahrens durch das luftdurchlässige Material entweichen.

## Beschreibung

Die Erfindung betrifft ein Formwerkzeug zur Anwendung in Spritzguß- und/oder Spritzpreßverfahren, welches wenigstens ein Werkzeugunterteil und ein Werkzeugoberteil aufweist.

Derartige Formwerkzeuge werden im Stand der Technik dazu eingesetzt, um die unterschiedlichsten dreidimensional gestalteten Formteile durch Spritzguß- oder Spritzpreßverfahren herzustellen. Dazu muß der formgebende Bereich des Formwerkzeugs entsprechend dem herzustellenden Formteil gestaltet und herausgearbeitet werden. Dazu wird der formgebende Bereich zumeist aus Metall herausgearbeitet. Dieser Prozeß ist aufwendig, da für jedes herzustellende Formteil eine Gußform aus Metall hergestellt werden muß.

Bei der Herstellung der eigentlichen Formteile ergibt sich das Problem, daß die Werkzeugform beim eigentlichen Spritzgußvorgang entlüftet werden muß, da die Luft im Werkzeug durch die eingeführte Formmasse verdrängt wird. Diese Entlüftung gestaltet sich oftmals als schwierig und ist verbesserungswürdig.

Der vorliegenden Erfindung lag daher die Aufgabe zu Grunde, ein Formwerkzeug bereitzustellen, dessen formgebender Bereich einfach ausgebildet werden kann und welches einfach zu entlüften ist.

Gelöst t wird diese Aufgabe durch ein Formwerkzeug der eingangs genannten Art, welches dadurch gekennzeichnet ist, daß zumindest das Werkzeugunterteil einen formgebenden Bereich aufweist, der aus einem luftdurchlässigen Material gebildet ist.

In vorteilhafter Weise überkommt die vorliegende Erfindung die im Stand der Technik bekannten Nachteile. Erfindungsgemäß weist zumindest das Werkzeugunterteil einen formgebenden Bereich auf, der aus einem luftdurchlässigen Material gebildet wird. Dadurch wird in vorteilhafter Weise das Entlüftungsproblem gelöst. Beim Spritzguß- oder Spritzpreßvorgang wird die Luft durch die eingeführte Formmasse aus dem Werkzeug über den luftdurchlässigen, formgebenden Bereich verdrängt. Dadurch daß dieser Bereich luftdurchlässig ausgebildet ist, kann die Luft problemlos entweichen, und es müssen keine speziellen Lüftungsventile, Lüftungsöffnungen o.ä. vorgesehen werden.

Das erfindungsgemäße Werkzeug ist besonders vorteilhaft einzusetzen mit einem Spritzguß- bzw. Spritzpreßverfahren, bei welchem das Formteil direkt beim Spritzguß- bzw. Spritzpreßvorgang mit einer dekorativen oder funktionalen Oberfläche versehen wird. Dies erfolgt vorzugsweise durch das Einlegen einer Kunststofffolie in die Werkzeugform. Die Kunststofffolie bildet die anschließende Oberfläche des Formteils. Bei der Herstellung des Formteils wird die Formmasse auf die Rückseite der in die Form eingelegten Folie gespritzt. Die Kunststofffolie paßt sich der Kontur des Werkzeugs an und das fertige Formteil weist, da die Folie und die Formmasse zumindest nach der Aushärtung der Formmasse eine feste Verbindung eingehen, direkt eine dekorative bzw. funktionale Oberfläche auf und muß somit nicht nachbehandelt werden. In Verbindung mit diesem Herstellungsverfahren für Formteile ist das erfindungsgemäße Formwerkzeug besonders geeignet, da die Luft insbesondere auch unterhalb der Folie durch den luftdurchlässigen formgebenden Bereich entweichen kann.

Ferner sind die mit dem Verfahren erfindungsgemäß einzusetzen luftdurchlässigen Materialien zumeist aufgrund ihrer lockereren Struktur als Metall einfach zu bearbeiten, wodurch der Herstellungsaufwand bei der Ausarbeitung des formgebenden Bereichs verringert wird.

Gemäß einer vorteilhaften Weiterbildung weist auch das Werkzeugoberteil einen formgebenden Bereich aus luftdurchlässigem Material auf. Diese Ausführungsform ist von besonderem Vorteil für die Herstellung von Formteilen, deren Oberfläche allseitig durch eine Kunststofffolie gebildet werden soll. Dadurch kann die Luft in vorteilhafter Weise sowohl aus dem Oberteil als auch durch das Unterteil entweichen.

Gemäß einer vorteilhaften Weiterbildung sind zumindest um den formgebenden Bereich aus luftdurchlässigem Material stabilisierende und/oder isolierende Elemente angeordnet. Diese geben in vorteilhafter Weise Stabilität und sind vorzugsweise aus Metall oder einem ähnlichem Material gebildet. Diese stabilisierenden Elemente sind vorzugsweise als Vierkant und/oder als Plattenelemente ausgebildet. So wird der aus luftdurchlässigem Material bestehende formgebende Bereich beispielsweise auf einer Platte plaziert und von einer Art Rahmen aus Vierkantelementen umschlossen. Dies bietet ferner in vorteilhafter Weise die Möglichkeit, unterschiedliche formgebende Bereiche in die stabilisierenden Elemente einzusetzen, so daß zur Herstellung unterschiedlich geformter Formteile nur ein Grundwerkzeug benötigt wird. Dies verringert wiederum die Kosten.

Gemäß einer vorteilhaften Weiterbildung sind die Konturen der in Kontakt stehenden Bereiche des Werkzeugunterteils und des Werkzeugoberteils aufeinander abgestimmt, so daß bei Verschluß des Werkzeugs das Werkzeugoberteil und das Werkzeugunterteil dicht gegeneinander abschließen. Dadurch wird in vorteilhafter Weise ein Herausquellen der Formmasse verhindert.

Gemäß einer vorteilhaften Weiterbildung weisen zumindest einige der stabilisierenden Elemente Entlüftungsöffnungen auf. Dabei sind die Entlüftungslöcher vorzugsweise Bohrlöcher. Durch die Anordnung von Entlüftungsöffnungen wird in vorteilhafter Weise bewirkt, daß die durch das luftdurchlässige Material des formgebenden Bereichs herausgepreßte Luft auch durch die stabilisierenden Elemente über die Öffnungen entweichen kann.

Gemäß einer vorteilhaften Ausführungsform ist das luftdurchlässige Material des formgebenden Bereichs thermostabil. Die Thermostabilität bewirkt in vorteilhafter Weise, daß das luftdurchlässige Material der Hitze der in das Werkzeug eingeführten Formmasse Stand halten kann und die Form sich nicht in nachteiliger Weise verändert.

Gemäß einer vorteilhaften Weiterbildung besteht der formgebende Bereich des erfindungsgemäßen Formwerkzeugs aus einem luftdurchlässigem Fasermaterial. Vorzugsweise ist dieses MDF-Material. Das Fasermaterial bietet den Vorteil, daß es zum einen aufgrund seiner lockeren Struktur luftdurchlässig und zum anderen sehr einfach zu bearbeiten ist. Dies bedeutet, daß die Herstellung des eigentlichen Formbereichs erheblich gegenüber den im Stand der Technik bekannten Werkzeugen, die aus Metall bestehen, vereinfacht wird, da das Fasermaterial einfach zu bearbeiten ist und somit schnell und einfach ein formgebender Bereich herausgearbeitet werden kann. Dadurch werden Zeit und Kosten eingespart.

Die vorliegende Erfindung soll nunmehr anhand einiger Figuren erläutert werden. Dabei zeigen:
- Figur 1: ein im Stand der Technik bekanntes Formwerkzeug
- Figur 2a und b: das erfindungsgemäße Formwerkzeug gemäß einer Ausführungsform.

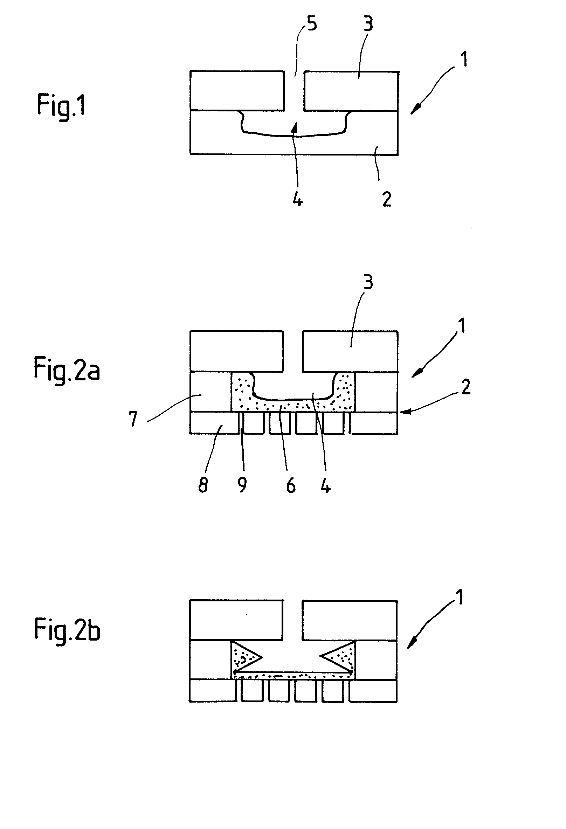

Figur 1 zeigt ein im Stand der Technik bekanntes Formwerkzeug 1, welches geschlossen dargestellt ist. Dieses besteht aus einem Werkzeugunterteil 2 und einem Werkzeugoberteil 3. Das Werkzeugunterteil 2 weist einen formgebenden Bereich 4 auf, welcher die Form des durch Spritzguß- oder Spritzpreßverfahren herstellbaren Formteils bestimmt. Die Formmasse wird gemäß dem dargestellten Beispiel über einen Kanal 5 im Werkzeugoberteil 3 in die Werkzeugform eingeführt. Durch Öffnen des Formwerkzeugs 1 kann ein fertiges Formteil entnommen werden. Das Formwerkzeug 1 ist aus Metall und die Form des formgebenden Bereichs 4 muß mühsam durch einen Metallhandwerker aus einem Block herausgearbeitet werden. Aufgrund der Festigkeit des Metalls ist dies insbesondere für kleine Details eine Präzisionsarbeit, die sehr zeit- und damit kostenintensiv ist. Ferner muß für jedes neue Formteil ein neues Werkzeug hergestellt bzw. angeschafft werden. Als besonderes Verfahren ist es im Stand der Technik bekannt, in das Formwerkzeug 1 eine Kunststofffolie einzulegen. Diese bildet die spätere Oberfläche des Formteils, da die Formmasse auf die Rückseite der Folie gespritzt wird und die Folie und die Masse bei der Aushärtung in der Kontur des formgebenden Bereichs 4 eine feste Verbindung eingehen. Dadurch wird ein Formteil bereits beim Spritzvorgang mit einer dekorativen und/oder funktionalen Oberfläche versehen, die nicht mehr nachbehandelt werden muß.

Figur 2a zeigt ein erfindungsgemäßes Formwerkzeug 1. Dieses weist auch ein Werkzeugoberteil 3 und ein Werkzeugunterteil 2 auf. Gemäß Ausführungsbeispiel weist das Werkzeugunterteil 2 einen formgebenden Bereich 4 auf, der aus einem luftdurchlässigem Material 6 gebildet wird. Dieses ist vorliegend MDF-Material. Der formgebende Bereich 4 aus luftdurchlässigem MDF-Material 6 ist von stabilisierenden Elementen umgeben. Zusammen bilden sie das Werkzeugunterteil 2. Die stabilisierenden Elemente sind vorliegend die seitlich angeordneten Vierkantelemente 7 sowie die Bodenplatte 8. Die Bodenplatte 8 weist Entlüftungslöcher 9 auf, durch welche die beim Spritzvorgang über das luftdurchlässige MDF-Material 6 austretende Luft entweichen kann. In vorteilhafter Weise kann die Form des formgebenden Bereichs 4 in einfacher Weise aus dem luftdurchlässigem Material 6 herausgearbeitet werden. Daher ist auch auf einfache Weise die Herstellung von Formteilen mit präzisen Details möglich. Die Herstellung des Formwerkzeugs 1 mit formgebenden Bereich 4 wird durch die besonderen Eigenschaften des luftdurchlässigen Materials 6 erheblich vereinfacht, da das MDF-Material viel einfacher zu bearbeiten ist als beispielsweise Metall, aus welchem die herkömmlichen formgebenden Bereiche im Stand der Technik herausgearbeitet werden. Das luftdurchlässige Material 6 ist in einem gewissen Maße thermostabil, so daß es nicht empfindlich gegenüber der Hitze der erwärmten Formmasse ist. Beim Einspritzten der Formmasse in den formgebenden Bereich 4 durch den Kanal 5 im Werkzeugoberteil 3, entweicht die Luft aus dem Formbereich 4 durch das luftdurchlässige Material 6 des formgebenden Bereiches 4 und durch die Entlüftungslöcher 9 nach außen. Dies Entlüftung der Werkzeugform ist durch vorliegende Erfindung problemlos möglich. Das erfindungsgemäße Formwerkzeug 1 ist insbesondere als Formwerkzeug zur Herstellung von Formteilen mit einer speziellen funktionellen oder dekorativen Oberflächen geeignet, wobei zur Herstellung des Formteils eine Kunststofffolie in den formgebenden Bereich 4 eingelegt wird, die sich mit der einzuspritzenden Formmasse zu einem festen Formteil mit der jeweils gewünschten Oberflächenausbildung verbindet. Ein solches Formteil muß nicht nachbehandelt werden, um besondere Oberflächeneigenschaften zu erhalten, da diese automatisch durch die Eigenschaften Folie verliehen werden. Dabei ist es im Stand der Technik bekannt, in den Metallbereich des Werkzeugunterteils 2 Löcher zu bohren und Vakuum anzulegen, damit die Folie in die Kontur des aus dem Metall herausgearbeiteten formgebenden Bereiches gesaugt wird. Die Bohrung von Löchern hat jedoch den Nachteil, daß die Folie durch den Druck der eingespritzten Formmasse in die Löcher gedrückt wird, so daß aufgrund der in die Löcher hineingedrückten Formmasse schnell eine unebene Oberfläche auf dem Formteil entsteht. Auch dieses Problem wird durch das erfindungsgemäße Formwerkzeug umgangen. Durch die Ausbildung des Formteils aus luftdurchlässigem Material wie MDF-Material, ist das Bohren von Löchern überflüssig, da die Luft durch die leicht poröse Struktur des luftdurchlässigen Materials entweichen kann, bzw. kann darüber ein Vakuum angelegt werden. Da jedoch keine Bohrlöcher vorhanden sind, entfällt das Problem, daß das Formteil gegebenenfalls eine unebene Oberfläche erhält, da das MDF-Material trotz seiner Luftdurchlässigkeit eine glatte Oberfläche aufweist.

Ein weiterer Vorteil des erfindungsgemäßen Formwerkzeugs 1 ergibt sich aus der Möglichkeit, unterschiedliche formgebende Bereiche 4 aus luftdurchlässigem Material 6 mit einem Grundwerkzeug 1 zu verwenden. So können die formgebenden Bereiche 4 aus luftdurchlässigem Material 6 lösbar in das Formwerkzeug 1 integriert werden. Zur Fixierung des formgebenden Bereichs 4 zwischen den stabilisierenden Elementen können Befestigungselemente oder ähnliches verwendet werden. Der formgebende Bereich 4 für das jeweils herzustellende Formteil wird einfach zwischen die stabilisierenden Elemente gesetzt, so vorliegend auf die Platte 8 und zwischen die Vierkantelemente 7. Dabei besteht ferner die Möglichkeit, die Vierkantelemente 7 verschiebbar anzuordnen, so daß gegebenenfalls das selbe Werkzeugoberteil 3 und die selbe Platte 8 mit unterschiedlich großen formgebenden Bereichen 4 aus luftdurchlässigem Material 6 bestückt werden kann. Zur perfekten Anpassung werden die Vierkantelemente 7 in die richtige Position geschoben und gegebenenfalls in der richtigen Position fixiert. Ein solches Beispiel zeigt Figur 2b. Das Formwerkzeug 1 entspricht dem in Figur 2 a dargestellten Formwerkzeug 1, allerdings wurde der formgebende Bereich 4 aus luftdurchlässigem Material 6 gegen ein anderes Formelement 4 ausgetauscht, so daß nun mit dem im wesentlichen gleichen Werkzeug ein anderes Formteil hergestellt werden kann. Durch diese vorteilhafte Ausgestaltung lassen sich mit dem erfindungsgemäßen Formwerkzeug kostengünstig verschieden geformte Formteile herstellen. Dieses Werkzeug ist insbesondere für den Einsatz bei Spritzguß- und Spritzpressverfahren geeignet, bei denen eine die Oberfläche des Formteils ausbildende Kunststofffolie in den formgebenden Bereich des Werkzeugs eingelegt wird, wobei die Formmasse auf die Rückseite der die Oberfläche ausbildende Folie gespritzt wird und so ein Formteil mit einer fertigen Oberfläche gebildet wird, die nicht nachbehandelt werden muß.

### Bezugszeichenliste

- 1: Formwerkzeug
- 2: Werkzeugunterteil
- 3: Werkzeugoberteil
- 4: formgebender Bereich
- 5: Kanal
- 6: luftdurchlässiges Material
- 7: Vierkantelement
- 8: Bodenplatte
- 9: Entlüftungslöcher

## Patentansprüche

1. Formwerkzeug zur Anwendung in Spritzguß- und/oder Spritzpreßverfahren, welches wenigstens ein Werkzeugunterteil und ein Werkzeugoberteil aufweist,
**dadurch gekennzeichnet,**
**daß** zumindest das Werkzeugunterteil einen formgebenden Bereich aufweist, der aus einem luftdurchlässigem Material gebildet ist.

2. Formwerkzeug nach Anspruch 1, **dadurch gekennzeichnet, daß** das Werkzeugoberteil einen formgebenden Bereich aus einem luftdurchlässigem Material aufweist.

3. Formwerkzeug nach Anspruch 1 oder 2, **dadurch gekennzeichnet, daß** zumindest um den formgebenden Bereich aus luftdurchlässigem Material stabilisierende und/oder isolierende Elemente angeordnet sind.

4. Formwerkzeug nach einem oder mehreren der Ansprüche 1 bis 3, **dadurch gekennzeichnet, daß** die Konturen der in Kontakt stehenden Bereiche des Werkzeugunterteils und des Werkzeugoberteils aufeinander abgestimmt sind, so daß bei Verschluß des Formwerkzeugs das Werkzeugoberteil und das Werkzeugunterteil dicht gegeneinander abschließen.

5. Formwerkzeug nach einem oder mehreren der Ansprüche 3 bis 4, **dadurch gekennzeichnet, daß** zumindest einige der stabilisierenden Elemente Entlüftungsöffnungen aufweisen.

6. Formwerkzeug nach Anspruch 5, **dadurch gekennzeichnet, daß** die Entlüftungslöcher Bohrlöcher sind.

7. Formwerkzeug nach einem oder mehreren der Ansprüche 3 bis 6, **dadurch gekennzeichnet, daß** die stabilisierenden Elemente als Vierkant- und/oder als Plattenelemente ausgebildet sind.

8. Formwerkzeug nach einem oder mehreren der Ansprüche 1 bis 7, **dadurch gekennzeichnet, daß** das luftdurchlässige Material des formgebenden Bereichs thermostabil ist.

9. Formwerkzeug nach einem oder mehreren der Ansprüche 1 bis 8, **dadurch gekennzeichnet, daß** der formgebende Bereich aus einem luftdurchlässigem Fasermaterial besteht.

10. Formwerkzeug nach einem oder mehreren der Ansprüche 1 bis 9, **dadurch gekennzeichnet, daß** das luftdurchlässige Material MDF-Material ist.

11. Formwerkzeug nach einem oder mehreren der Ansprüche 1 bis 10, **dadurch gekennzeichnet, daß** der formgebende Bereich aus luftdurchlässigem Material am Formwerkzeug lösbar angeordnet ist.

12. Formwerkzeug nach einem oder mehreren der Ansprüche 3 bis 11, **dadurch gekennzeichnet, daß** der formgebende Bereich aus luftdurchlässigem Material ein separates Formelement ist, welches zur Bildung des fertigen Werkzeugs mit formgebenden Bereich zwischen den stabilisierenden und/oder isolierenden Elementen anordbar ist.
